(19) **Europäisches Patentamt / European Patent Office / Office européen des brevets**

(11) **EP 1 092 604 B1**

(12) **EUROPÄISCHE PATENTSCHRIFT**

(45) Veröffentlichungstag und Bekanntmachung des Hinweises auf die Patenterteilung:
**08.08.2007   Patentblatt 2007/32**

(51) Int Cl.:
***B60T 8/00*** *(2006.01)*

(21) Anmeldenummer: **00119714.4**

(22) Anmeldetag: **09.09.2000**

(54) **Bremsanlage für Kraftfahrzeuge**

Vehicle braking installation

Installation de freinage pour véhicules

(84) Benannte Vertragsstaaten:
**DE FR GB SE**

(30) Priorität: **13.10.1999   DE 19949258**

(43) Veröffentlichungstag der Anmeldung:
**18.04.2001   Patentblatt 2001/16**

(73) Patentinhaber: **Bayerische Motoren Werke Aktiengesellschaft
80809 München (DE)**

(72) Erfinder: **Demmeler, Thilo
San Francisco,
CA 94133 (US)**

(56) Entgegenhaltungen:
**WO-A-98/36956           DE-A- 4 030 724
US-A- 5 255 962**

**Beschreibung**

Die Erfindung bezieht sich auf eine Bremsanlage für Kraftfahrzeuge nach dem Oberbegriff des Patentanspruchs 1.

Eine derartige Bremsanlage ist beispielsweise aus der DE 197 42 988 bekannt. Diese bekannte Bremsanlage schließt an jedem seiner vier Räder eine Bremse ein, die von jeweils einem elektrisch gesteuerten Bremsaktuator bzw. Stellglied betätigt wird. Die Bremsen werden zum einen betätigt, wenn der Fahrer des Kraftfahrzeuges über eine Bremspedaleinheit eine Bremsmomentenanforderung abgibt, und zum anderen, wenn aufgrund von Sensorsignalen zusätzlicher Bremsfunktionen (z. B. TCS ( Traktions-Control-System) oder DSC (Dynamische Fahrstabilitätsregelung)) weitere Bremsmomentanforderungen vorliegen.

Eine Bremsanlage mit einem Fahrdynamikregler, der Sollschlupfwerte für die Fahrzeugräder vorgibt, ist aus der DE 40 30 724 A1 bekannt.

Der Bremswunsch des Fahrers wird mit einer Vorgabeeinheit ermittelt, die aus einem System von 3 Rechnern und mehreren Sensoren, die am Bremspedal angebracht sind, besteht. Durch die mehrfache Redundanz wird eine fehlertolerante Auslegung der Grundbremse erzielt. Durch Auswertung weiterer Fahrdynamiksensoren wird in einer Beobachtungseinheit das Soll-Fahrverhalten sowie das Ist-Fahrverhalten ermittelt und sogenannte höhere Bremsenfunktionen realisiert. Dabei kann die Beobachtungeinheit in die Vorgabeeinheit integriert sein. Bei fehlersicherer Auslegung der höheren Bremsenfunktionen entsprechend dem Stand der Technik können diese auch auf weniger als drei Rechner verteilt sein.

Die ggf. auch radselektive Betätigung der Bremsaktuatoren bzw. der Steilglieder wird von einer Zentralreglerei- einheit, der sog. Zetralsteuerung, abhängig vom Soll-Fahrverhalten und vom Ist-Fahrverhalten vorgenommen. Dabei kann die Beobachtungeinheit und die Vorgabeeinheit in die Zentralreglereinheit integriert sein.

Weiterhin sind intern auch noch nicht veröffentlichte Bremsregelungsanlagen bekannt, bei den dezentrale, an jedem Rad angebrachte Kraftregler vorgesehen sind. Durch diese Bremsregelungsanlagen wird die Bremskraftregelung in Form einer Kaskadenregelung, einerseits durch die übergeordnete Zentralreglereinheit und andererseits durch die untergeordneten Kraftregler, durchgeführt. Da hierbei nur Sollkräfte an die Bremsaktuatoren weitergegeben werden, erfolgt die Regelung des Radschlupfes weiterhin in der Zentralreglereinheit. Dazu müssen, z B. über ein Kommunikationsnetzwerk, erst die aktuellen Radgeschwindigkeiten ausgetauscht werden, dann die Ansteuergrößen berechnet werden und diese anschließend wieder an die Radeinheiten gesendet werden. Die zusätzliche Datenübertragungszeit addiert sich zur Regeltotzeit und verschlechtert die Regelgüte der Schupfregelung. Diese beeinflußt wiederum maßgeblich den Bremsweg, die Fahrzeugstabilität sowie den Komfort.

Es ist Aufgabe der Erfindung, eine Bremsanlage eingangs genannter Art derart zu verbessern, daß die Regelgüte der Bremsanlage erhöht sowie die Regeltotzeit reduziert und damit die Sicherheit des Fahrzeuges verbessert werden.

Diese Aufgabe wird durch die Merkmale des Patentanspruchs 1 gelöst.

Vorteilhafte Weiterbildungen der Erfindung sind die Gegenstände der abhängigen Patentansprüche.

Die erfindungsgemäße Bremsanlage für Kraftfahrzeuge weist eine Vorgabeeinheit zur Ermittlung des Bremswunsches des Fahrers, eine Beobachtungseinheit zur Ermittlung des Soll-Fahrverhaltens und des Ist-Fahrverhaltens und eine Zentralreglereinheit auf, die abhängig von den Ausgangssignalen der Vorgabeeinheit und der Beobachtungseinheit Soll-Radgrößen zur radselektiven Ansteuerung der einzelnen Bremsaktuatoren der Fahrzeugräder ermittelt. Die Soll-Radgrößen sind die Soll-Radkraft und der Soll-Radschlupf. Jedem Bremsaktuator bzw. Stellglied ist ein am Fahrzeugrad angebrachter Kraft-Schlupf-Regler vorgeschaltet. Zur Berechnung des Ist-Radschlupfes wird dem Kraft-Schlupfregler von der Zentralreglereinheit eine Radreferenzgeschwindigkeit zur Verfügung gestellt. Diese entspricht weitgehend der Geschwindigkeit des freirollenden Rades. Im einfachsten Fall ist diese die Fahrzeugreferenzgeschwindigkeit, die in der Zentralreglereinheit gebildet wird.

Jeder Kraft-Schlupf-Regler erhält als Eingangssignale zumindest die Soll-Radkraft von der Zentralreglereinheit, den Soll-Radschlupf von der Zentralreglereinheit, die Radreferenzgeschwindigkeit von der Zentralreglereinheit, die gemessenen Ist-Radkraft und den gemessenen Ist-Radschlupf bzw. die gemessene Ist-Radgeschwindigkeit zur Ermittlung des Ist-Radschlupfes. Der Kraft-Schlupf-Regler führt abhängig von mindestens einem Betriebsparameter entweder eine Radschlupfregelung oder eine Radkraftregelung durch.

Vorzugsweise wird die Radkraftregelung anstelle einer Radschlupfregelung durchgeführt, wenn die Fahrzeuggeschwindigkeit einen vorgegebenen Schwellwert unterschreitet und/oder wenn der Soll-Radschlupf einen vorgegebenen Schwellwert unterschreitet.

Diese erfindungsgemäße Einführung einer Kaskadenregelung mit unterlagertem Schlupf- und Kraftregler in den Radeinheiten ist derart, daß das Übertragungsverhalten des Bremsaktuators ausschließlich in der dazugehörigen Radeinheit modelliert ist.

Durch die Erfindung wird eine verbesserte Schlupfregelgüte aufgrund kürzerer Regeltotzeiten durch ein schnelleres Reversieren bei Schlupfeinläufen erreicht. Weiterhin ist eine optimale Zusammensetzbarkeit der Komponenten möglich, da erstens die Funktionalität und die Software der Zentralregiereinheit von den verwendeten Aktuatoren unbeeinflußt ist, zweitens die Kombination verschiedenartiger Aktuatoren (hydraulisch, elektromechanisch) möglich ist und drittens die physikalisch orientierte Schnittstelle grundsätzlich für die Anbindung eines Gesamtfahrzeugreglers an unterlagerte Regeleinrichtungen in einem verteilten Regelsystem sehr gut geeignet ist. Weiterhin ist eine sehr gute unabhängige Bewertungsmöglichkeit und Vergleichbarkeit verschiedener Bremsaktuatoren und deren Regelqualität im Gesamtsystem gegeben. Schließlich ist auch zur Erhöhung der Verfügbarkeit eine Blockierverhinderung als radweise Rückfallebene möglich.

In der Zeichnung ist ein Ausführungsbeispiel der Erfindung dargestellt. Es zeigen

Fig. 1    eine Gesamtdarstellung der einzelnen Komponenten der erfindungsgemäßen Bremsregelungsanlage und

Fig. 2    eine Reibwert-Schlupfkurve im Zusammenhang mit einer grundsätzlichen Momentenbetrachtung.

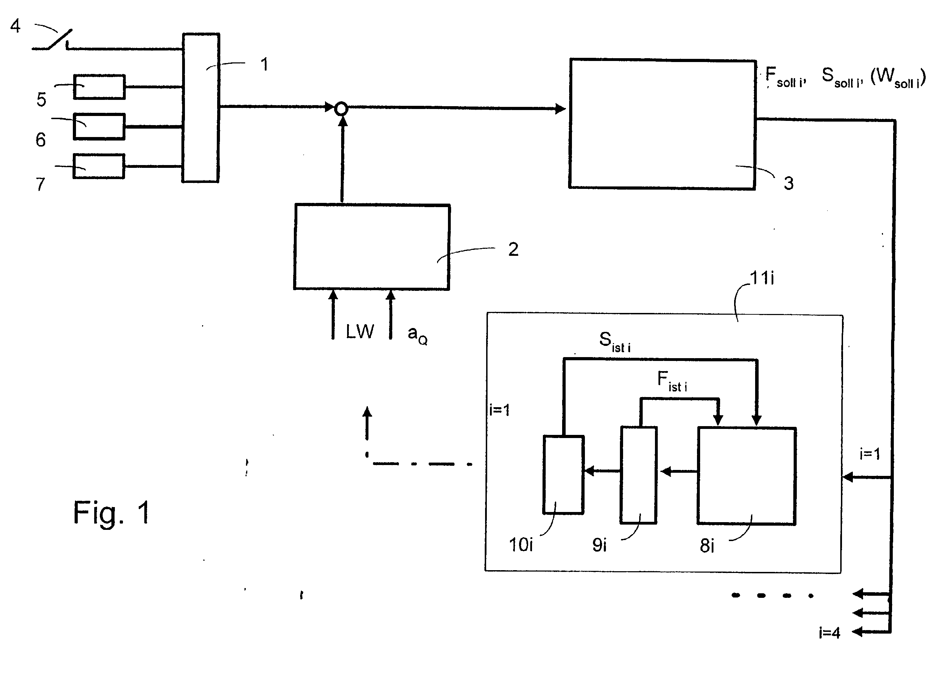

In Fig. 1 ist eine Gesamtdarstellung der einzelnen Komponenten der erfindungsgemäßen Bremsregelungsanlage dargestellt.

Eingangsgrößen einer Vorgabeeinheit 1 sind beispielsweise die Signale der Sensoren 4 bis 7, wobei diese Signale den Bremswunsch des Fahrer sensieren. Beschleunigungsbefehle oder Verzögerungsbefehle können auch durch ein Fahrerassistenzsystem und nicht unmittelbar vom Fahrer eingespeist werden.

In einem Fahrzeugbeobachter 2, dem beispielsweise zumindest der Lenkwinkel LW und die Fahrzeug-Querbeschleunigung $a_Q$ als Eingangssignale zur Verfügung gestellt werden, werden die Fahrzeugzustandgrößen bzw. das Soll- und das Ist-Fahrverhalten erfaßt.

In einer Zentralrechnereinheit 3 werden abhängig vom Soll-Fahrverhalten und vom Ist-Fahrverhalten Soll-Radgrößen, die für jedes Rad unterschiedlich sein können, berechnet. Diese Soll-Radgrößen sind die Soll-Radkraft $F_{soll\ i}$, der Soll-Radschlupf $S_{soll\ i}$ und ggf. noch weitere radindividuelle Größen wie z. B. der Soll-Spindelweg $W_{soll\ i}$, wobei i gleich 1,2,3 oder 4 für ein Fahrzeug mit 4 Rädern und somit mit 4 Radeinheiten 11i ist. Die Soll-Radgrößen werden an alle Radeinheiten 11 i, beispielsweise über ein Bus-Kommunikationsnetzwerk, weitergeleitet.

Jede Radeinheit 11i besteht aus einem Kraft-Schlupf-Regler 8i, einem Bremsaktuator 9i mit Kraftsensor und einem Rad 10i mit Drehzahlsensor. Zumindest die Ist-Raddrehzahl, mit der der Ist-Radschlupf $S_{ist\ i}$ berechnet wird, bei einer Radschlupfregelung oder die Ist-Radkraft $F_{ist\ i}$ bei einer Radkraftregelung werden von den entsprechenden Sensoren gemessen und direkt, also nicht über die Zentralreglereinheit 3, an den Kraft-Schlupf-Regler 8i übermittelt. Abhängig von der Art der Regelung, die insbesondere abhängig von der Fahrzeuggeschwindigkeit gewählt wird, findet eine von der Zentralreglereinheit 3 unabhängige untergeordnete radindividuelle Regelung im Kraft-Schlupf-Regler 8i statt. Diese Regelung hat wiederum Auswirkungen auf die Fahrzeugzustandsgrößen, die in der Beobachtungseinheit 2 erfaßt werden (Wirkrichtung vgl. strichpunktierter Pfeil) und an die Zentralreglereinheit 3 weitergeleitet werden.

Optional können weitere radindividuelle Betriebsgrößen von der Zentralreglereinheit 3 an jede der Radeinheiten 11 i gesendet werden, wie z. B. die Radaufstandkraft oder der Reibwert. Ebenso können Daten, wie die gemessenen Ist-Radgrößen, direkt von jeder Radeinheit 11i an die Zentralreglereinheit 3 gesendet werden.

Der Erfindung liegt die ff. grundsätzliche Momentenbetrachtung am Rad und an der Schnittstelle zwischen Fahrzeug und Rad zugrunde:

Primär hat die Radbremse Einfluß auf die Längskräfte am Rad. Die Längsgeschwindigkeit des Rades wird mit Hilfe der bekannten ABS-Sensoren gemessen. Die Messung der Quergeschwindigkeit des Rades ist extrem aufwendig und erfolgt höchstens im Versuchsbetrieb.

Zur Schnittstellendefinition der erfindungsgemäßen Bremsregelungsanlage wird daher das Längskraft-Schlupfverhalten eines Rades betrachtet, wie dies auch bei ABS üblich ist. Das Längskraft-Schlupfverhalten wird durch eine Differentialgleichung bestimmt, die sich aus dem Momentengleichgewicht am Rad ergibt:

$$M_{Antrieb} + M_{Bremse} + M_{Fahrbahn} + M_{Radträgheit} = 0$$

$$M_{Antrieb} + F_{Bremse} \cdot C_{Bremse} + F_{Radaufstand} \cdot r_{dyn} \cdot \mu + Q \cdot dw/dt = 0$$

wobei

3

| | |
|---|---|
| $M_{Antrieb}$ | das über die Antriebswellen abgestützte Moment am Rad |
| $M_{Bremse}$ | das am Rad wirkende Bremsmoment |
| $M_{Fahrbahn}$ | das auf die Fahrbahn wirkende Moment |
| $M_{Radtragheit}$ | das Radträgheitsmoment |
| $F_{Bremse}$ | die am Rad wirkende Bremskraft |
| $C_{Bremse}$ | Bremskonstante (abhängig vom Bremsenzustand) |
| $F_{Radaufstand}$ | Radaufstandskraft (abhängig von der dynamischen Radlast) |
| $r_{dyn}$ | der dynamische Radrollradius |
| $\mu$ | Reibwert (fahrbahnabhängig) |
| Q | das (nahezu konstante) Radträgheitsmoment (abhängig von der Masse und der Form des Rades) und |
| dw/dt | die Radbeschleunigung (abhängig von der Momentenbilanz am Rad) |

sind.

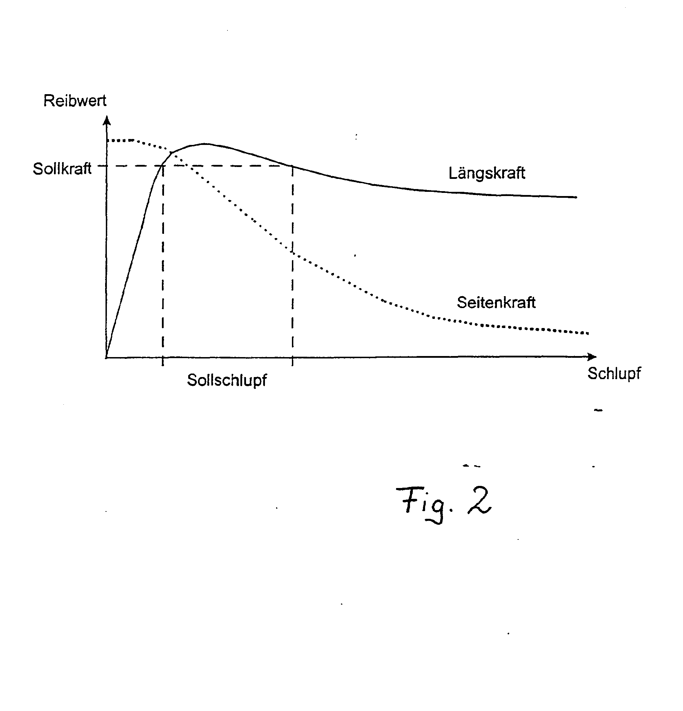

In Fig. 2 ist der charakteristische Zusammenhang zwischen dem Reibwert $\mu$ und dem (Rad-) Schlupf mittels der sogenannten $\mu$-Schlupfkurve dargestellt. Fig. 2 zeigt den Reibwert sowie die Längskraft und die Seitenkraft in Abhängigkeit vom Schlupf. Die Längskraft, die schließlich im Reifenlatsch angreift, ergibt sich aus der Ausnutzung des Reibwertes $\mu$.

Als Führungsgröße für einen beispielsweise elektromechanischen Bremsaktuator (mit Aktuatorspindel) stehen grundsätzlich die Radkraft bzw. die Bremskraft am Rad (F) und der Radschlupf (S) zur Verfügung, die beide gemessen werden. Zudem könnte auch eine Wegsteuerung der Aktuatorspindel über den Spindelweg (W) erfolgen.

Bei einem typischen Verlauf der $\mu$-Schlupfkurve ist der Arbeitspunkt nur durch eine Längskraftvorgabe nicht eindeutig bestimmt, da die übertragbare Längskraft auf den meisten Fahrbahnen nach dem Erreichen des Maximums im Schlupfbereich von 4% bis 15 % wieder abfällt. Regeleingriffe, bei den bewußt mit hohen Schlupfeinläufen eine Seitenkraftreduktion erfolgt, benötigen daher eine Sollschlupfvorgabe für eine Radschlupfregelung.

Die Verwendung des Schlupfes als Führungsgröße ist dagegen bei einem stehenden Fahrzeug nicht möglich. Zudem gehen Ungenauigkeiten in der Bildung der zur Schlupfberechnung benötigten Referenzgeschwindigkeiten in die Qualität des Sollschlupfes ein. Dies gilt besonders für kleine Fahrzeuggeschwindigkeiten und für den stabilen Teil der $\mu$-Schlupfkurve, in dem sehr kleine Änderungen im Schlupf große Änderungen der Längskraft bewirken. In diesem Fall wird eine Radkraftregelung bevorzugt.

Jede Radeinheit 11 i mit Bremsaktuator 9i benötigt daher beide Sollgrößen ($F_{soll\ i}$, $S_{soll\ i}$), die situationsabhängig zum Einsatz kommen. Bei optimaler Abstimmung konvergieren beide Führungsgrößen in einem Arbeitspunkt, so daß bei Übergängen keine Unstetigkeiten auftreten. Eine Umschaltung zwischen Schlupf- und Kraftregelung kann von der Zentralreglereinheit 3 oder von der Radeinheit 11 ausgehen.

Die beste Regelgüte wird erreicht, wenn alle hochdynamischen Schlupfregelvorgänge direkt vor Ort in der Radeinheit 11 i vom Kraft-Schlupf-Regler 8i abgearbeitet werden. Hierzu werden alle dynamischen regelrelevanten Signale, insbesondere die Ist-Raddrehzahl direkt in der Radeinheit 11i gemessen und dem Kraft-Schlupf-Regler 8i zugeführt. Zu den hochdynamischen Schlupfregelvorgängen zählt beispielsweise eine ABS-Regelung, bei der das Rad möglichst am Maximum der $\mu$-Schlupfkurve gehalten wird.

## Patentansprüche

1. Bremsanlage für Kraftfahrzeuge mit einer Vorgabeeinheit (1) zur Ermittlung des Bremswunsches des Fahrers, mit einer Beobachtungseinheit (2) zur Ermittlung des Soll-Fahrverhaltens und des Ist-Fahrverhaltens und mit einer Zentralreglereinheit (3), die abhängig von den Ausgangssignalen der Vorgabeeinheit und der Beobachtungseinheit Soll-Radgrößen zur radselektiven Ansteuerung der einzelnen Bremsaktuatoren der Fahrzeugräder ermittelt, **dadurch gekennzeichnet, daß** die Soll-Radgrößen die Soll-Radkraft ($F_{soll\ i}$) und der Soll-Radschlupf ($S_{soll\ i}$) sind und daß jedem Bremsaktuator (9i) ein am Fahrzeugrad (10i) angebrachter Kraft-Schlupf-Regler (8i) vorgeschaltet ist, der als Eingangssignale zumindest die Soll-Radkraft ($F_{soll\ i}$) von der Zentralreglereinheit (3), den Soll-Radschlupf ($S_{soll\ i}$) von der Zentralreglereinheit (3), die Radreferenzgeschwindigkeit von der Zentralreglereinheit (3), direkt die gemessenen Ist-Radkraft ($F_{ist\ i}$) und direkt den gemessenen Ist-Radschlupf ($S_{ist\ i}$) oder die gemessene Ist-Raddrehzahl zur Berechnung des Ist-Radschlupfes ($S_{ist\ i}$) erhält und der abhängig von mindestens einem Betriebsparameter entweder eine Radschlupfregelung oder eine Radkraftregelung durchführt.

2. Bremsanlage nach Patentanspruch 1, **dadurch gekennzeichnet, daß** die Radkraftregelung anstelle einer Radschlupfregelung durchgeführt wird, wenn die Fahrzeuggeschwindigkeit einen vorgegebenen Schwellwert unterschreitet.

3. Bremsanlage nach Patentanspruch 1, **<u>dadurch gekennzeichnet, daß</u>** die Radkraftregelung anstelle einer Radschlupfregelung durchgeführt wird, wenn der Soll-Radschlupf ($S_{soll\ i}$) einen vorgegebenen Schwellwert unterschreitet.

## Claims

1. A brake system for motor vehicles with an input unit (1) for determining the driver's desire to brake, with an observation unit (2) for determining the desired driving behaviour and the actual driving behaviour and with a central control unit (3), which, as a function of the output signals of the input unit and the observation unit, determines desired wheel variables for the wheel-selective control of the individual brake actuators of the vehicle wheels, **characterised in that** the desired wheel variables are the desired wheel force ($F_{desired\ i}$) and the desired wheel slip ($S_{desired\ i}$) and a force-slip controller (8i) which is mounted on the vehicle wheel (10i), is connected in front of each brake actuator (9i), which force-slip controller (8i) receives, as input signals, at least the desired wheel force ($F_{desired\ i}$) from the central controller (3), the desired wheel slip ($S_{desired\ i}$) from the central controller (3), the wheel reference speed from the central controller (3), the measured actual wheel force ($F_{actual\ i}$) directly and the measured actual wheel slip ($S_{actual\ i}$) or the measured actual rotational wheel speed directly, for calculating the actual wheel slip ($S_{actual\ i}$) and as a function of at least one operating parameter, the force-slip controller carries out either a wheel slip control or a wheel force control.

2. A brake system according to claim 1, **characterised in that** the wheel force control is carried out instead of a wheel slip control when the vehicle speed falls below a predetermined threshold value.

3. A brake system according to claim 1, **characterised in that** the wheel force control is carried out instead of a wheel slip control when the desired wheel slip ($S_{desired\ i}$) falls below a predetermined threshold value.

## Revendications

1. Dispositif de freinage pour véhicules automobiles, comprenant une unité de prédéfinition (1) pour déterminer le souhait de freinage du conducteur, une unité d'observation (2) pour déterminer le comportement de roulage de consigne et le comportement de roulage réel, ainsi qu'une unité de régulation centrale (3) qui détermine, en fonction des signaux de sortie de l'unité de prédéfinition et de l'unité d'observation, des grandeurs de roues de consignes pour piloter les différents actionneurs de freinage des roues du véhicule en fonction d'une sélection de roue,
**caractérisé en ce que**
les grandeurs de roues de consignes sont la force de roue de consigne ($F_{cons\ i}$) et le glissement de roue de consigne ($S_{cons\ i}$), et un régulateur de force/glissement (8i) fixé sur la roue de véhicule (10i) est raccordé en amont à chaque actionneur de freinage (9i) et reçoit en signaux d'entrée au moins la force de roue de consigne ($F_{cons\ i}$) provenant de l'unité de régulation centrale (3), le glissement de roue de consigne ($S_{cons\ i}$) provenant de l'unité de régulation centrale (3), la vitesse de référence de roue provenant de l'unité de régulation centrale (3), directement la force de roue réelle ($F_{réelle\ i}$) mesurée et directement le glissement de roue réel ($S_{réel\ i}$) mesuré ou la vitesse de rotation de roue réelle mesurée pour calculer le glissement de roue réel ($S_{réel\ i}$), et il réalise, en fonction d'au moins un paramètre de fonctionnement, soit une régulation du glissement de roue, soit une régulation de la force de roue.

2. Dispositif de freinage selon la revendication 1,
**caractérisé en ce que**
la régulation de la force de roue est réalisée à place d'une régulation du glissement de roue lorsque la vitesse du véhicule devient inférieure à une valeur seuil prédéfinie.

3. Dispositif de freinage selon la revendication 1,
**caractérisé en ce que**
la régulation de la force de roue est réalisée à place d'une régulation du glissement de roue lorsque le glissement de roue de consigne ($S_{cons\ i}$) devient inférieur à une valeur seuil prédéfinie.

Fig. 1

Reibwert

Sollkraft

Längskraft

Seitenkraft

Sollschlupf

Schlupf

Fig. 2

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19742988
- DE 4030724 A1